# EUROPEAN PATENT SPECIFICATION

(11) **EP 0 773 637 B1**
(45) Date of publication and mention of the grant of the patent: **18.09.2002**
(21) Application number: 96850170.0
(22) Date of filing: 16.10.1996
(51) Int. Cl.: H04B 7/04, H04B 7/06

(54) **Method and apparatus for mobile indoor radio transmission using multiple antennas**
Verfahren und Einrichtung für mobile Innenraumfunkübertragung mit Mehrfachantennenanordnung
Procédé et dispositif pour transmission mobile intérieure avec multiplicité d'antennes

(30) Priority: 10.11.1995 SE 9503990
(43) Date of publication of application: 14.05.1997
(73) Proprietor: TELIA AB, 123 86 Farsta (SE)
(72) Inventor: Gunmar, Christer, 142 42 Skogas (SE); Teght, Ulf, 162 23 Vällingby (SE)
(74) Representative: Hopfgarten, Nils

(56) References cited:
- EP-A- 0 568 507
- EP-A- 0 656 697
- EP-A- 0 668 668
- DE-A- 4 219 677
- US-A- 5 564 121

## Description

### TECHNICAL FIELD

The present invention relates to mobile communication in areas where the wave propagation results in that interferences between different components in a radio wave interfere with each other. For instance where a signal from a transmitter is reflected and interferes with the primary wave at which islands with not acceptable receiving conditions are obtained. Especially are related to systems where the mobiles move slowly or are not moving at all. This type of environment primarily exist indoors.

### PRIOR ART

It is previously known to compensate for influence of fading by utilizing a number of antennas with different polarization. Examples of such utilization are given in patent document US3922685 with the intention to secure position finding of mobiles at navigation applications. The document does not describe and neither indicates that the method shall be possible to use at mobile telephony. In the document EP568507 a system is described where the antenna characteristics can be changed and a varied transmission lobe is made while transmission is going on in order to reduce the influence of fading. The above mentioned documents relate to transmission in outdoor environments. The special problems which arise in indoor environments or equivalent are not dealt with. The intention with the present invention is to deal with the problem of radio transmissions in indoor environments.

### DESCRIPTION OF THE INVENTION

### TECHNICAL PROBLEM

At utilization of mobile telephony indoors there will arise areas where the signal strength of the radio waves are unacceptable or are completely blacked-out. The reason for such phenomena is that the radio waves are reflected in walls, ceilings and floors. A transmitted radio wave will at that be received as a multiple of waves which are out of phase in relation to each other. The displacement of the waves results in that signal strength maxima respective minima are obtained in different points within the environment in question. In indoor environments the mobility of the mobiles are low which results in that the period of staying in a signal strength minimum can be comparatively long. Corresponding problem also can be found in outdoor environments, but the mobiles are usually moving and normally move with greater speed in outdoor environments, so the problem is of less importance.

Solutions which indicate methods and devices which can be utilized in indoor environments are not known, especially not in connection with digital radio transmission.

Document D1 discloses a method and a system as defined by the preamble of independent claims 1 and 9 respectively.

The present invention indicates a simple solution which can be applied in indoor environments.

### THE SOLUTION

The invention is as defined by independent claims 1 and 9.

The present invention relates to method at mobile radio systems.

The mobile radio system includes mobile units which communicate via fixed base stations in the mobile radio system. To the base stations antenna arrangements are connected. Each of the base stations is connected to at least two antenna arrangements. Each base station transmits over one of the antenna arrangements at a time. The antenna arrangements are utilized alternatingly at which low fading is obtained.

In the mobile telecommunication system the information transmission is performed digitally in time slots. The transmission over each of the antenna arrangements is made for a period of time corresponding to one time slot per mobile. Frames, corresponding to a certain number of time slots, are transmitted displaced over the antenna arrangements. The base stations transmit over antenna arrangements including alternative sets of antennas. By placing the antennas close where the transmission minima in certains points correspond to transmission levels which are acceptable from at least one of the other antennas in the antenna arrangement. The switching between a subset of the antennas in the digital system, for instance GSM, is made at the same pace as the jump frequency at frequency jumping. The switching between the antennas makes possible interference gains. An electronic control system controls the alternation between the antennas. The control system further defines the subset of the antennas according to a current need depending on the traffic situation at the occasion in question. The control system further reconfigures the cells with regard to existing traffic distribution. The invention further relates to a device at mobile telephone system which includes base stations to which antenna arrangements can be connected. Mobile units communicate with each other via the mobile telephone system where the signal strength at reception in the existing environment is unacceptable in which areas the mobiles are for longer periods. The antenna arrangements are connected in consecutive periods of time. Signal strength minima for a first antenna arrangement corresponds to that the signal strength is acceptable for a second antenna arrangement. The reception condition for the mobiles are consequently arranged to be acceptable for the mobiles independent of location in room.

The antenna arrangements are at least two, and include at least one antenna. A control logic is further arranged in or in connection with the base station/stations for control of the radio transmission over the antenna arrangements. The control logic further can reconfigure the antennas in the antenna arrangements depending on the need at a given point of time/situation.

The information transmission is further made digitally, for instance in a GSM-system. The switching between the antenna arrangements is made with a high frequency, for instance at a pace which roughly corresponds to that which is utilized at a jump frequency at frequency jumping. Information regarding frequency selection and antenna arrangement is transmitted by the base stations to the mobiles. The mobiles are further arranged to automatically perform necessary adjustments with regard to reception from respective antenna arrangement. The device is further intended to be used indoors. The antennas are placed close to each other with different polarization. The antennas further can be placed in different rooms/premises. The antennas in one and the same room /premises is preferably arranged to belong to different antenna arrangements.

### ADVANTAGES

The present invention indicates a simple solution which is applicable in indoor environments. Especially bitlosses at digital transmission and reception in indoor environments are avoided. The switching between two or more antenna configurations is easy to apply with switching functions in the radio transmitter. More sophisticated transmissions over the antennas can also be introduced by introduction of advanced control logic. By a rapid shifting between the antennas the mobiles will be in areas with transmission minima for very short periods of time, at which losses in the reception are minimized or simply do not occur. The invention further allows that the antennas can be arranged close to each other with a good result. This results in that the application can easily be realized without expensive installations as a consequence.

### DESCRIPTIONS OF FIGURES

Figure 1 shows a mobile radio system where transmission is made over one antenna.

Figure 2 shows a system where transmission is made over two antennas.

Figure 3 shows a system where transmission is made over a multiple of antennas.

Figure 4 shows a control system which controls the transmission over the antennas in Figure 3.

Figure 5 shows examples of antenna arrangements according to the invention in an indoor environment.

### DETAILED EMBODIMENT

In the following the invention is described with references to the Figures and the terms therein.

The present invention relates to a method and device at mobile radio system. Especially is related to a mobile radio system to be used in indoor environments. To bridge reception problems in areas with a not acceptable signal strength, a number of antenna arrangements are introduced. Information is transmitted consecutively over each of the antenna arrangements. The control of said transmissions is performed by one in the system arranged control logic. The reception conditions will in this way be possible to arrange in an acceptable way in the digital mobile telephone system.

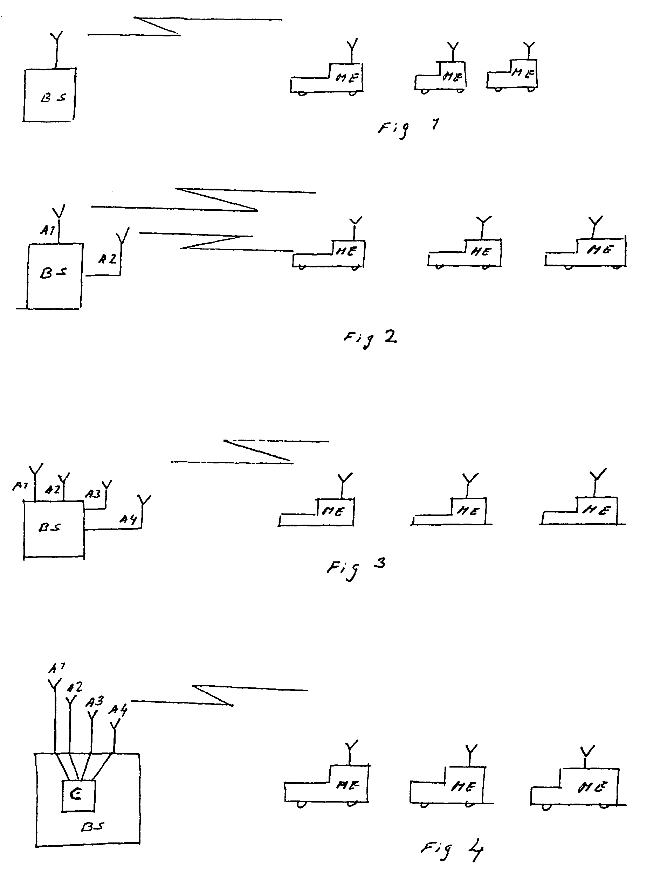

A mobile radio system includes a number of base stations, BS, and mobile units, ME. In a conventional mobile radio system according to Figure 1, an antenna or an antenna arrangement is connected to each base station. Communication is made by radio waves between the mobile units and the base stations. The radio transmission can be made analog or digital in a number of radio channels which operate with different frequencies within an allocated frequency range. The systems which have been utilized have been directed towards communication in outdoor environments. Concurrently with the development of the mobile telephony the cell division has developed towards smaller cells and towards communication in indoor environments. At application of mobile telephony in indoor environments, the mobile units will be less moving than in outdoor environments. Indoor environments where fixed antenna arrangements are easily arranged, easily give rise to areas with radio shadow or unacceptable reception conditions.

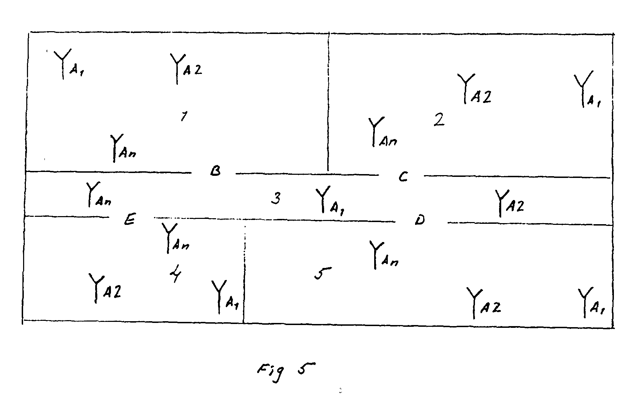

In order to secure acceptable reception conditions two antenna arrangements are arranged according to Figure 2. At establishing of communication the mobile unit calls/is called via the base station. At handshaking between the mobile and the station, the station informs about which radio frequency/frequencies that shall be utilized. Further are informed about the polarization and switching frequency of the antenna arrangements A1, A2. The mobile stores the received information and a control logic in the mobile adjusts the frequency/frequencies in question, as well as the switching frequency. Transmission of the information is further made digitally, so information about which frames that shall be utilized is given the mobile by the base station. Communication between the mobile and the base station is after that established, at which the information from the base station is transmitted alternatingly over antenna arrangement A1 respective antenna arrangement A2. The mobile after that synchronizes towards the base station to make the reception and the transmission in phase. The procedure at such synchronizations is well known to the expert in the field. Further, there is literature within the field which describes different procedures. Any closer description in these respects is consequently not necessary. When synchronization has been made, the base station starts the transmission over antenna arrangement A1. The mobile receives the information, but if the mobile is in an area where antenna arrangement A1 does not give an acceptable reception, the information will be partly or completely lost. After a predefined period of time the transmission from the station switches from antenna arrangement A1 to antenna arrangement A2. The location of antenna arrangement A1 is separated from antenna arrangement A2, so the transmission over the latter antenna arrangement gives one for the mobile acceptable reception. The mobile after that receives the information from A2 until the transmission again goes back to A1. Switching between A1 and A2 is after that made by the defined frequency. The transmission which is made digitally is made in frames. A suitable pace for switching between the antenna arrangements corresponds roughly to the length of a time slot per mobile. In order not to lose any information, the same time slot is transmitted over each of the antenna arrangements A1 respective A2. In order to further improve reception conditions, antenna arrangements according to Figure 3 can be applied. In this case a number of antenna arrangements A1, A2, A3...An are arranged to transmit information. As in preceding description the information is transmitted consecutively over the antenna arrangements. In this case the transmission consequently is made over a number of n antenna arrangements. Information regarding the number of antenna arrangements, radio frequency etc is transmitted as previously to the mobile at the handshaking procedure. The switching between the antenna arrangements is made as in the previously, with a pace which principally corresponds to the length of a time slot. The same information is transmitted over each of the antenna arrangements. By utilization of a multiple of antenna arrangements, the possibility for the mobile to receive the information correctly, independent of location in room, is increased. In a further variant of the invention according to Figure 4 there is a control unit, C, arranged at the mobile station. Said control unit, C, can also be centrally placed in the system or be given other for the application suitable locations. The control logic senses the traffic situation and decides on the basis of that which antenna arrangements that shall be utilized. The mobile is for instance within an area which is covered by antenna arrangements A1, A2, and A4. If no need in other respects exist, the mobile system in this case sees to it that the transmission is made over said antenna arrangements. As an alternative, the order between the transmissions over the antenna arrangements can be changed by the control logic. In each antenna arrangement is included at least one antenna; normally there will be a multiple of antennas in each antenna arrangement. In Figure 5 is shown example of how antenna arrangements and included individual antennas are arranged in an indoor environment with five rooms 1, 2, 3, 4 and 5. Antennas belonging to antenna arrangement A1 have been indicated by A1, antennas belonging to antenna arrangement A2 have been indicated by A2 etc. In the example is arranged an antenna belonging to each antenna arrangement in each of the rooms. Between the rooms there are openings arranged where people can pass. In these openings also the radio waves can pass freely. This results in that the radio waves from the different antennas in the antenna arrangements influence each other. In addition to this influence the radio waves will be reflected in existing walls at which interferences with the own transmission from an antenna occurs. Among other things these factors contribute to that reception minima in the reception conditions occur. To bridge this condition, the information is transmitted repeatedly and consecutively over a multiple of antenna arrangements. The transmission over each antenna arrangement is time limited to correspond to about one time slot per mobile. By suitable placing of the antennas in the antenna arrangements, different areas are obtained where the reception conditions are defective, respective where the reception is acceptable. By in said way alternating the transmission over the antenna arrangements, an acceptable reception condition will be achieved.

The location of the antennas can be comparatively close to each other. The control unit, which controls the transmission over the antennas in the antenna arrangements, also can reconfigure the antenna arrangements to include different antenna constellations.

The implication of this is that one or more antennas can be in common for two or more antenna arrangements.

## Claims

1. A method of transmitting information in a digital mobile radio system including mobile units which are communicating with each other via fixed radio stations, each radio station being connected to at least two antenna arrangements, in which method information is transmitted by said radio stations alternatingly over said connected antenna arrangements and in which information is transmitted over one antenna arrangement at a time, **characterized in that** the information is transmitted in time slots which are transmitted over each one of the antenna arrangements and **in that** the information transmission is switched between the antenna arrangements with a frequency roughly corresponding to a period of time equal to the length of one time slot.

2. Method according to claim 1, **characterized in that** frames, corresponding to a certain number of the time slots, are transmitted displaced over the antenna arrangements.

3. Method according to claims 1 or 2, **characterized in that** the radio stations transmit over the antenna arrangements including alternative antenna sets.

4. Method according to any of the previous claims, **characterized in that** the switching between subsets of the antennas in the digital system, for instance GSM, is made at the same pace as a jump frequency at frequency jumping.

5. Method according to any of the previous claims, **characterized in that** alternation between the antennas is controlled by an electronic control system.

6. Method according to claim 5, **characterized in that** the control system defines a subset of antennas according to a current need and the prevailing traffic situation.

7. Method according to any of the previous patent claims, **characterized in that** the mobile radio system is divided into cells.

8. Method according to any of the previous patent claims, **characterized in that** the control system reconfigures the cells with regard to existing traffic distribution.

9. A device for a digital mobile telephone system, including base stations (BS) and antenna arrangements (A1-An), at least two antenna arrangements being adapted to be connected to each base station, and said antenna arrangements being arranged to be connected one at a time in consecutive periods of time for information transmission, mobile units (ME) being provided for communication with each other via said base stations, **characterized in that** said base stations (BS) are adapted to transmit information in time slots which are transmitted over each one of the connected antenna arrangements and **in that** each one of said periods of time roughly corresponds to the length of one time slot.

10. Device according to claim 9, **characterized in that** each antenna arrangement includes at least one antenna.

11. Device according to claims 9 or 10, **characterized in that** a control logic (C) is provided to control the information transmission over the antenna arrangements.

12. Device according to claim 11, **characterized in that** the control logic (C) is arranged to reconfigure antennas of said antenna arrangement depending on the need at a given time or according to a prevailing traffic situation.

13. Device according to any of the claims 9-12, **characterized in that** the mobile telephone system is a GSM-system.

14. Device according to any of the claims 9-13, **characterized in that** the switching between the antenna arrangements is arranged to be made with roughly the same pace as the pace for a jump frequency at frequency jumping.

15. Device according to any of the claims 9-14, **characterized in that** the mobile units are arranged to automatically perform necessary adjustments with regard to reception from the respective antenna arrangements.

16. Device according to any of the claims 9-15, **characterized in that** the device is intended to be utilized in an indoor environment.

17. Device according to claim 16, **characterized in that** in the indoor environment the antennas are arranged to be placed close to each other with different polarization.

18. Device according to claims 16 or 17, **characterized in that** the antennas are adapted to be placed in different rooms.

19. Device according to any of the patent claims 16-18, **characterized in that** the antennas in one and the same room are arranged to belong to different antenna arrangements.

## Patentansprüche

1. Verfahren zum Übertragen von Information in einem digitalen Mobilfunksystem umfassend Mobileinheiten, die über feste Funkstationen miteinander kommunizieren, wobei jede Funkstation mit mindestens zwei Antennenanordnungen verbunden ist, bei welchem Verfahren Information von den Funkstationen abwechselnd über die verbundenen Antennenanordnungen übertragen wird, und bei welchem zu einem Zeitpunkt Information über eine Antennenanordnung übertragen wird, **dadurch gekennzeichnet, dass** die Information in Zeitschlitzen übertragen wird, die über jede der Antennenanordnungen übertragen werden, und dass die Informationsübertragung zwischen den Antennenanordnungen geschaltet wird mit einer Frequenz, die ungefähr einem Zeitabschnitt entspricht, der gleich ist wie die Länge eines Zeitschlitzes.

2. Verfahren nach Anspruch 1, **dadurch gekennzeichnet, dass** Rahmen, die einer bestimmten Anzahl von Zeitschlitzen entsprechen, versetzt über die Antennenanordnungen übertragen werden.

3. Verfahren nach den Ansprüchen 1 oder 2, **dadurch gekennzeichnet, dass** die Funkstationen über die Antennenanordnungen, die alternative Gruppen von Antennen umfassen, übertragen.

4. Verfahren nach einem der vorangehenden Ansprüche, **dadurch gekennzeichnet, dass** das Schalten zwischen Untergruppen der Antennen in dem digitalen System, beispielsweise GSM, mit der gleichen Geschwindigkeit gemacht wird wie eine Sprungfrequenz beim Frequenzspringen.

5. Verfahren nach einem der vorangehenden Ansprüche, **dadurch gekennzeichnet, dass** ein Wechsel zwischen den Antennen durch ein elektronisches Steuerungssystsem gesteuert wird.

6. Verfahren nach Anspruch 5, **dadurch gekennzeichnet, dass** das Steuerungssystem eine Untergruppe von Antennen entsprechend einem aktuellen Bedarf und der herrschenden Verkehrssituation bestimmt.

7. Verfahren nach einem der vorangehenden Patentansprüche, **dadurch gekennzeichnet, dass** das Mobilfunksystem in Zellen unterteilt ist.

8. Verfahren nach einem der vorangehenden Patentansprüche, **dadurch gekennzeichnet, dass** das Steuerungssystem die Zellen rekonfiguriert im Hinblick auf die existierende Verkehrssituation.

9. Einrichtung für ein digitales Mobiltelefonsystem, mit Basisstationen (BS) und Antennenanordnungen (A1-An), wobei zumindest zwei Antennenanordnungen dazu ausgebildet sind, mit jeder Basisstation verbunden zu werden, wobei die Antennenanordnungen eingerichtet sind, eine zu einem Zeitpunkt in aufeinanderfolgenden Zeitabschnitten für die Informationsübertragung zu verbinden, und wobei Mobileinheiten (ME) vorgesehen sind zur Kommunikation miteinander über die Basisstationen, **dadurch gekennzeichnet, dass** die Basisstationen (BS) dazu ausgebildet sind, Information in Zeitschlitzen zu übertragen, die über jede der verbundenen Antennenanordnungen übertragen werden, und dass jeder der Zeitabschnitte ungefähr der Länge eines Zeitschlitzes entspricht.

10. Einrichtung nach Anspruch 9, **dadurch gekennzeichnet, dass** jede Antennenanordnung mindestens eine Antenne umfasst.

11. Einrichtung nach den Ansprüchen 9 oder 10, **dadurch gekennzeichnet, dass** eine Steuerschaltung (C) vorgesehen ist, um die Informationsübertragung über die Antennenanordnungen zu steuern.

12. Einrichtung nach Anspruch 11, **dadurch gekennzeichnet, dass** die Steuerschaltung (C) eingereichtet ist, Antennen der Antennenanordnung zu rekonfigurieren abhängig von dem Bedarf zu einer bestimmten Zeit oder entsprechend der herrschenden Verkehrssituation.

13. Einrichtung nach einem der Ansprüche 9-12, **dadurch gekennzeichnet, dass** das Mobiltelefonsystem ein GSM-System ist.

14. Einrichtung nach einem der Ansprüche 9-13, **dadurch gekennzeichnet, dass** das Schalten zwischen den Antennenanordnungen eingerichtet ist, mit ungefähr der gleichen Geschwindigkeit gemacht zu werden wie die Geschwindigkeit für eine Sprungfrequenz beim Frequenzspringen.

15. Einrichtung nach einem der Ansprüche 9-14, **dadurch gekennzeichnet, dass** die Mobileinheiten eingerichtet sind, automatisch notwendige Einstellungen im Hinblick auf den Empfang von den jeweiligen Antennenanordnungen durchzuführen.

16. Einrichtung nach einem der Ansprüche 9-15, **dadurch gekennzeichnet, dass** die Einrichtung dazu vorgesehen ist, in einem Innenbereich genutzt zu werden.

17. Einrichtung nach Anspruch 16, **dadurch gekennzeichnet, dass** in dem Innenbereich die Antennen eingerichtet sind, nahe beieinander platziert zu werden mit unterschiedlicher Polarisation.

18. Einrichtung nach den Ansprüchen 16 oder 17, **dadurch gekennzeichnet, dass** die Antennen dazu ausgebildet sind, in verschiedenen Räumen platziert zu werden.

19. Einrichtung nach einem der Patentansprüche 16-18, **dadurch gekennzeichnet, dass** die Antennen in ein und demselben Raum eingerichtet sind, zu verschiedenen Antennenanordnungen zu gehören.

## Revendications

1. Procédé de transmission d'informations dans un système radio mobile numérique comprenant des unités mobiles qui communiquent les unes avec les autres par l'intermédiaire de stations radio fixes, chaque station radio étant connectée à au moins deux agencements d'antennes, dans lequel procédé des informations sont transmises par lesdites stations radio alternativement sur lesdits agencements d'antennes connectés, et dans lequel des informations sont transmises sur un agencement d'antennes à la fois, **caractérisé en ce que** les informations sont transmises dans des intervalles de temps qui sont transmis sur chacun des agencements d'antennes et **en ce que** la transmission des informations est commutée entre les agencements d'antennes avec une fréquence correspondant approximativement à une période de temps égale à la longueur d'un intervalle de temps.

2. Procédé selon la revendication 1, **caractérisé en ce que** des trames, correspondant à un certain nombre d'intervalles de temps, sont transmises décalées sur les agencements d'antennes.

3. Procédé selon les revendications 1 ou 2, **caractérisé en ce que** les stations radio transmettent sur les agencements d'antennes comprenant des ensembles d'antennes alternatifs.

4. Procédé selon l'une quelconque des revendications précédentes, **caractérisé en ce que** la commutation entre les sous-ensembles des antennes dans le système numérique, par exemple GSM, est effectuée à la même fréquence qu'une fréquence de saut au moment du saut de fréquence.

5. Procédé selon l'une quelconque des revendications précédentes, **caractérisé en ce que** l'alternance entre les antennes est commandée par un système de commande électronique.

6. Procédé selon la revendication 5, **caractérisé en ce que** le système de commande définit un sous-ensemble d'antennes en fonction d'un besoin actuel et de la situation de trafic actuelle.

7. Procédé selon l'une quelconque des revendications précédentes, **caractérisé en ce que** le système radio mobile est divisé en cellules.

8. Procédé selon l'une quelconque des revendications précédentes, **caractérisé en ce que** le système de commande reconfigure les cellules par rapport à la répartition de trafic existante.

9. Dispositif pour un système de téléphonie mobile numérique, comprenant des stations de base (BS) et des agencements d'antennes (A1 à An), au moins deux agencements d'antennes étant adaptés pour être connectés à chaque station de base, et lesdits agencements d'antennes étant agencés de manière à être connectés un à la fois dans des périodes de temps consécutives pour la transmission d'informations, des unités mobiles (ME) étant prévues pour communiquer les unes avec les autres par l'intermédiaire desdites stations de base, **caractérisé en ce que** lesdites stations de base (BS) sont adaptées pour transmettre des informations dans des intervalles de temps qui sont transmis sur chacun des agencements d'antennes et **en ce que** chacune desdites périodes de temps correspond approximativement à la longueur d'un intervalle de temps.

10. Dispositif selon la revendication 9, **caractérisé en ce que** chaque agencement d'antennes comprend au moins une antenne.

11. Dispositif selon la revendication 9 ou 10, **caractérisé en ce qu'**une logique de commande (C) est prévue pour commander la transmission d'informations sur les agencements d'antennes.

12. Dispositif selon la revendication 11, **caractérisé en ce que** la logique de commande (C) est agencée de manière à reconfigurer les antennes dudit agencement d'antennes en fonction du besoin à un instant donné ou conformément à une situation de trafic actuelle.

13. Dispositif selon l'une quelconque des revendications 9 à 12, **caractérisé en ce que** le système de téléphonie mobile est un système GSM.

14. Dispositif selon l'une quelconque des revendications 9 à 13, **caractérisé en ce que** la commutation entre les agencements d'antennes est agencée de manière à être effectuée approximativement à la même fréquence que la fréquence de saut au moment du saut de fréquence.

15. Dispositif selon l'une quelconque des revendications 9 à 14, **caractérisé en ce que** les unités mobiles sont agencées de manière à effectuer automatiquement les ajustements nécessaires concernant la réception des agencements d'antennes respectifs.

16. Dispositif selon l'une quelconque des revendications 9 à 15, **caractérisé en ce que** le dispositif est destiné à être utilisé dans un environnement intérieur.

17. Dispositif selon la revendication 16, **caractérisé en ce que**, dans l'environnement intérieur, les antennes sont agencées de manière à être placées à proximité les unes des autres avec une polarisation différente.

18. Dispositif selon la revendication 16 ou 17, **caractérisé en ce que** les antennes sont adaptées pour être placées dans différentes pièces.

19. Dispositif selon l'une quelconque des revendications 16 à 18, **caractérisé en ce que** les antennes dans une seule et même pièce sont agencées de manière à appartenir à différents agencements d'antennes.
